# Europäisches Patentamt
## European Patent Office
## Office européen des brevets

(11) Veröffentlichungsnummer: **0 203 223**
**B1**

(12) ## EUROPÄISCHE PATENTSCHRIFT

(45) Veröffentlichungstag der Patentschrift:
**19.04.89**

(51) Int. Cl.⁴: **A 01 C 7/20**

(21) Anmeldenummer: **85114447.7**

(22) Anmeldetag: **13.11.85**

(54) Sämaschine mit unter Federandruckkraft stehenden Säscharen.

(30) Priorität: **14.11.84 DE 3441611**

(43) Veröffentlichungstag der Anmeldung:
**03.12.86 Patentblatt 86/49**

(45) Bekanntmachung des Hinweises auf die Patenterteilung:
**19.04.89 Patentblatt 89/16**

(84) Benannte Vertragsstaaten:
**AT DE FR GB**

(56) Entgegenhaltungen:
**DE-C-3 141 078**
**GB-A-1 460 737**
**US-A-1 387 536**
**US-A-3 627 061**

(73) Patentinhaber: **Amazonen- Werke H. Dreyer GmbH & Co. KG, Postfach 51, D-4507 Hasbergen- Gaste (DE)**

(72) Erfinder: **Gattermann, Bernd, Eichenwall 3, D-2872 Hude i.O. (DE)**
Erfinder: **Steenken, Bernhard, Waldhöfe 17, D-4475 Sögel 2 (DE)**

(74) Vertreter: **Patentanwälte Grünecker, Kinkeldey, Stockmair & Partner, Maximilianstrasse 58, D-8000 München 22 (DE)**

EP 0 203 223 B1

## Beschreibung

Die Erfindung betrifft eine Sämaschine mit einem Rahmen, der sich in Betriebsstellung über Laufräder auf dem Boden abstützt und mit einem Vorratsbehälter, von dem aus über Dosierelemente das im Vorratsbehälter befindliche Saatgut über Leitungsrohre und daran angeschlossene und in aufrechter Ebene bewegbar angeordnete Säschare in den Boden eingebracht wird, wobei jeweils im Bereich hinter den Laufrädern sich zumindest ein Säschar befindet, welches das Saatgut in der Laufradspur in den Boden einbringt und wobei das in der Laufradspur angeordnete Säschar an einem um ein Gelenk verschwenkbaren Scharhalter befestigt ist und mittels einer Feder in Richtung auf den Boden gedrückt wird.

Eine derartige Sämaschine ist aus der DE-C-3 141 078 bekannt. Bei dieser Sämaschine wird der von den Laufrädern verdichtete Boden zum Ablegen des Saatkorns vorbereitet, indem die in der Laufradspur angeordneten Laufradschare mit einem erhöhten Druck in den Boden gedrückt werden. Sie sind dann in der Lage, auch in den verdichteten Boden einzudringen. Erreicht wird dies unter Verwendung von Federn, die auf diese Schare wirken. Die Anordnung dieser Federn ist insbesondere deshalb schwierig, weil gerade im Bereich hinter den Laufrädern am wenigsten Platz zur Verfügung steht, um geeignete Federelemente anzubringen. Bei dieser bekannten Sämaschine ist die Schardruckfeder für das Laufradschar eine Zugfeder und ist an einem nach hinten ragenden Teil des Rahmens angeordnet. Diese Anordnung ist jedoch mit mehreren Nachteilen verbunden. So muß beispielsweise zur Befestigung der Zugfeder ein zusätzliches Rahmenteil an der Sämaschine angeordnet werden. Außerdem besteht die Gefahr, daß sich die Zugfeder sehr schnell mit den von den Laufrädern mit hochgenommenen Bodenteilen zusetzt, so daß die Federwirkung der Zugfeder eingeschränkt wird. Außerdem benötigt diese bekannte Lösung viel Platz zur Anordnung der Feder.

Aus der GB-A-1 460 737 ist es bekannt, ein Säschar über eine Parallelogrammschwinge in den Boden zu drücken. Bei einer dort beschriebenen Lösung besteht ein Arm der Schwinge aus einer horizontal verlaufenden Blattfeder. Die dort dargestellte Lösung ist jedoch nicht geeignet, hinter den Laufrädern einer Sämaschine angeordnete Säschare in den Boden zu drücken, weil sie ebenfalls viel Platz in Anspruch nimmt.

Aus der US-PS 2 756 662 ist es bekannt, zwischen den Laufrädern einer Sämaschine angeordnete Säschare mit Hilfe eines sich entlang des Scharhalters einer Schar erstreckenden Armes in den Boden zu drücken. Der Arm wird an einer Welle gelagert, die hydraulisch verdreht verden kann. Dadurch läßt sich das Schar in den Boden drücken. Der Arm ist vorzugsweise aus Federstahl hergestellt.

Der Erfindung liegt die Aufgabe zugrunde, eine Sämaschine der eingangs genannten Art im Hinblick auf die Federbeaufschlagung der hinter den Laufrädern angeordneten Säschare zu verbessern.

Diese Aufgabe wird bei einer Lösung dadurch gelöst, daß die Feder als Blattfeder ausgebildet und aufrecht über dem Gelenk des Scharhalters verlaufend innerhalb eines für die Anordnung mindestens dieses Gelenkes vorgesehenen Halterungsrahmens angeordnet ist.

Durch diese Maßnahme wird eine kompakte Ausbildung und damit auch eine einfache Anordnung der Federn geschaffen. Die Blattfeder ist durch den sie umgebenen Halteungsrahmen zuverlässig vor Verschutzungen, Feuchtigkeit und anderen äußeren Einflüssen geschützt und benötigt keine besondere, etwa anzubringende Halterung, sondern ist in dem bereits vorhandenen, für das Säschar vorgesehenen Halterungsrahmen untergebracht. Hierbei soll mit in die Erfindung eingeschlossen sein, daß das Laufradschar beispielweise als Normalsäschar, Bandsäschar, Einscheibenschar oder Hackschar ausgebildet sein kann. Durch die aufrechte Anordnung der Blattfedern benötigt die Blattfeder in Fahrtrichtung der Sämaschine gesehen nur einen kleinen Raum. Mit der Erfindung wird der ohnehin begrenzte Raum, der hinter den Laufrädern zur Verfügung steht, in optimaler Weise ausgenutzt, ohne daß dadurch nach hinten abragende Teile der Sämaschine angebracht werden müßten.

Dabei ist weiter erfindungsgemäß vorgesehen, daß sich der Befestigungspunkt der Blattfeder über dem Gelenk des in der Laufradspur angeordneten Säschares beifindet.

In vorteilhafter Weiterbildung ist der Halterungsrahmen im wesentlichen geschlossen und erstreckt sich mit einem Teil etwa vertikal hinter dem Laufrad und weist eine Öffnung auf, durch die sich der Scharhalter für die Säschar in den Halterungsrahmen hinein erstreckt. Bei dieser Lösung könnte auch eine beispielsweise im wesentlichen vertikal ausgerichtete Zugfeder innerhalb des Halterungsrahmens verwendet werden, die dann durch die Anordnung innerhalb des Halterungsrahmens auch gegen eine Verschmutzung zuverlässig geschützt wäre.

Weitere Einzelheiten und Vorteile der Erfindung sind den übrigen Unteransprüchen, der Beispielsbeschreibung und den Zeichnungen zu entnehmen. Hierbei zeigen

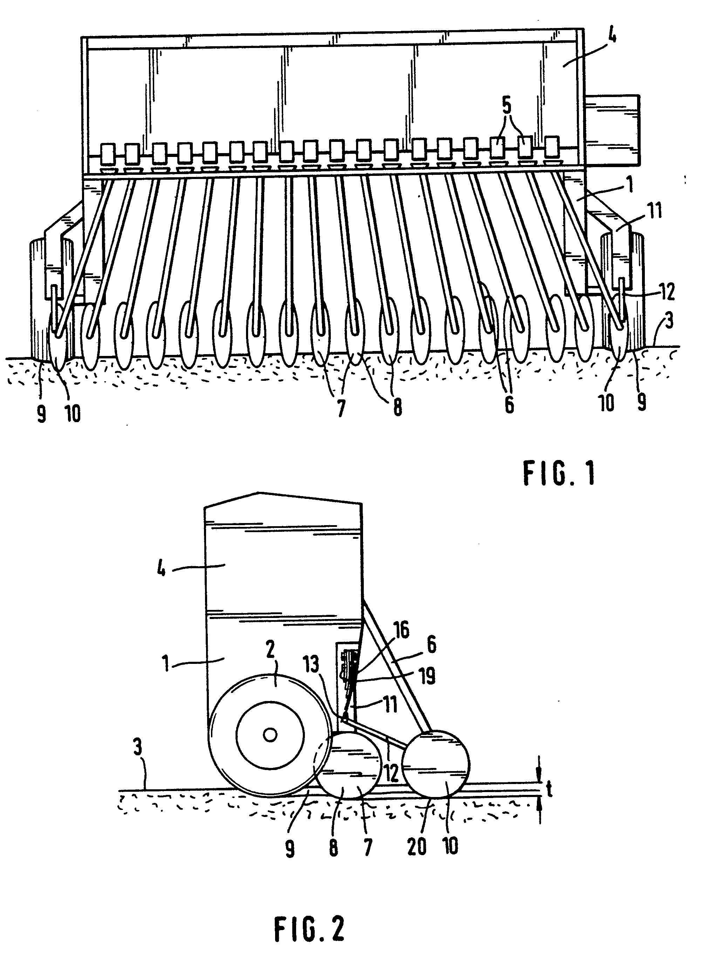

Figur 1 eine erfindungsgemäß ausgebildete Sämaschine in der Ansicht von hinten,
Figur 2 die Sämaschine in der Seitenansicht und

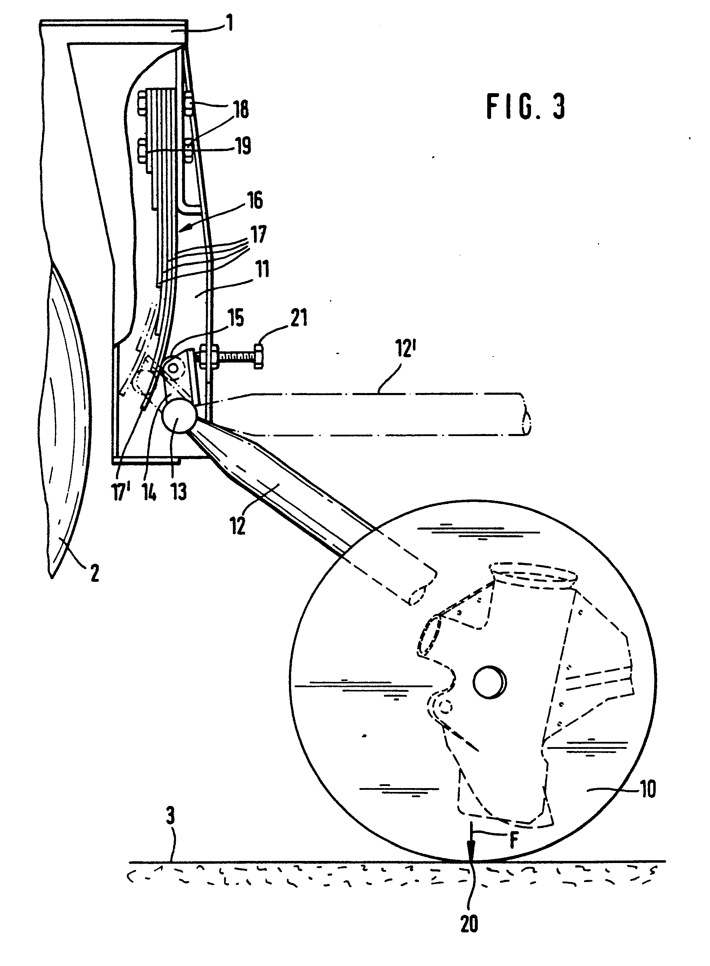

Figur 3 die erfindungsgemäße Anordnung der Schardruckfeder in der Sämaschine in der Seitenansicht, im Teilschnitt und in vergrößertem Maßstab.

Die Sämaschine ist mit einem Rahmen 1, der sich in Betriebsstellung über die Laufräder 2 auf den Boden 3 abstützt und mit einem Vorratsbehälter 4 ausgestattet. Im unteren Bereich des Vorratsbehälters 4 sind die Dosierelemente 5 angeordnet, von denen aus über die Leitungsrohre 6 das im Vorratsbehälter 4 befindliche Saatgut in einstellbaren Mengen mit Hilfe der Säschare 7 in bekannter Weise in den Boden 3 eingebracht wird.

Die zwischen den Laufrädern 2 angeordneten Drillschare 7 sind als Einscheibenschare 8 ausgebildet. Die Einscheibenschare 8 sind auf Lücke stehend in drei hintereinander gelegenen Querreihen mit einem sehr engen Reihenabstand zueinander angeordnet. Der Reihenabstand der einander benachbarten Einscheibenschare beträgt bei der sogenannten Engsaat etwa 8 bis 10 cm.

In jeder von den Laufrädern 2 erzeugten Laufradspur 9 ist ein weiteres als Einscheibensäschar 10 ausgebildetes Säschar angeordnet. Dieses Einscheibenschar 10 ist jeweils an einem an dem Rahmen 1 der Sämaschine integrierten bzw. angeordneten Halterungsrahmen 11 über den Scharhalter 12 mit Hilfe des Gelenks 13 in aufrechter Ebene schwenkbar angeordnet. Über das Gelenk 13, an dem der Scharhalter 11 des Säschares 10 angelenkt ist, ragt der Hebel 14 hinaus. An dem vorderen Ende des Hebels 14 ist die Rolle 15 gelagert.

Der Halterungsrahmen 11 ist, wie zu erkennen ist, als im wesentlichen geschlossener Hohlrahmen ausgebildet und ist mit einer Öffnung versehen, durch die sich der Scharhalter 12 des Säschares 10 in die Kontur des Halterahmens hinein erstreckt. Innerhalb des Halterungsrahmens 11 ist die als Blattfederpaket 16 ausgebildete Feder angeschraubt. Das Blattfederpaket 16 besteht aus den unterschiedlich langen Blattfedern 17, die mit den Schrauben 18 an dem Halterungsrahmen 11 befestigt sind. Die Blattfedern 17 sind aufrecht angeordnet, so daß sich der Befestigungspunkt 19 des Blattfederpaketes 16 über dem Gelenk 13 des in der Laufradspur angeordneten Säschares 10 befindet. Die dem Befestigungspunkt 19 abgewandte Seite der längsten Blattfeder 17' liegt an der Rolle 15 an. Somit drücken die Blattfedern 17 das Säschar 10 in Richtung des Bodens, damit das Säschar 10 in den vorgefestigten Boden der Laufradspur eindringen kann und um eine Säfurche zu ziehen, in der das Saatgut dann abgelegt werden kann.

Die Blattfedern 17 sind so ausgelegt, daß die an der in den Boden 3 eindringenden Stelle 20 des Säschares 10 wirksame Kraft F über einen gewissen Schwenkbereich des Säschares 10 in dem Einsatzbereich des Säschares 10 mehr oder weniger konstant bleibt. Weiterhin ist das Säschar 10 so angelenkt, daß es von der mit durchgezogenen Linien gezeichneten Stellung in die mit gestrichelten Linien angedeuteten Stellung angehoben werden kann, wie durch den Scharhalter 12' angedeutet wird.

Die Eindringtiefe T der in der Laufradspur angeordneten Säschare 10 in den Boden 3 wird durch den einstellbaren Anschlag 21 bestimmt.

Aus vorstehenden Ausführungen wird deutlich, daß die erfindungsgemäß angeordnete Feder nur wenig Raum in Anspruch nimmt und einfach untergebracht werden kann. Darüber hinaus ist die Feder zuverlässig gegen Schmutz geschützt, so daß sie unabhängig vom Verschmutzungsgrad der Maschine zuverlässig und mit gleichbleibender Kraft das Säschar in den Boden drücken kann.

**Patentansprüche**

1. Sämaschine mit einem Rahmen (1), der sich in Betriebsstellung über Laufräder (2) auf dem Boden (3) abstützt, und mit einem Vorratsbehälter (4), von dem aus über Dosierelemente (5) das im Vorratsbehälter befindliche Saatgut über Leitungsrohre und daran angeschlossene und in auf rechter Ebene bewegbar angeordnete Säschare (8) in den Boden eingebracht wird, wobei jeweils im Bereich hinter den Laufrädern sich zumindest ein Säschar (10) befindet, welches das Saatgut in der Laufradspur in den Boden einbringt und wobei das in der Laufradspur (9) angeordnete Säschar (10) an einem um ein Gelenk (13) verschwenkbaren Scharhalter (12) befestigt ist und von einer Feder in Richtung auf den Boden gedrückt wird, dadurch gekennzeichnet, daß die Feder als Blattfeder (16, 17) ausgebildet und aufrecht über dem Gelenk (13) des Scharhalters (12) verlaufend innerhalb eines für die Anordnung mindestens dieses Gelenkes (13) vorgesehenen Halterungsrahmens (11) angeordent ist.

2. Sämaschine nach Anspruch 1, dadurch gekennzeichnet, daß sich der Befestigungspunkt (19) der Blattfeder (16, 17) über dem Gelenk (13) des in der Laufradspur (9) angeordneten Säschares (10) befindet.

3. Sämaschine nach Anspruch 1 oder 2, dadurch gekennzeichnet, daß der Halterungsrahmen (11) im wesentlichen geschlossen ist und sich mit einem Teil etwa vertikal hinter dem Laufrad erstreckt, und daß der Halterungsrahmen (11) eine Öffnung aufweist, durch die sich der Scharhalter (12) für das Säschar (10) in den Halterungsrahmen hinein erstreckt.

4. Sämaschine nach wenigstens einem der Ansprüche 1 bis 3, dadurch gekennzeichnet, daß über das Gelenk (13), an dem der Scharhalter (12) des Säschares (10) angelenkt ist, ein Hebel (14) hinausragt, und daß an diesem Hebel (14) die Blattfeder (16, 17, 17') anliegt.

5. Sämaschine nach Anspruch 4, dadurch gekennzeichnet, daß an dem Hebel (14) eine Rolle (15) gelagert ist, an der die Blattfeder (16, 17') anliegt.

6. Sämaschine nach wenigstens einem der vorangegangenen Ansprüche, dadurch gekennzeichnet, daß die Feder aus einem Blattfederpaket (16) mit unterschiedlich langen Blattfedern (17) besteht.

7. Sämaschine nach wenigstens einem der vorangegangenen Ansprüche, dadurch gekennzeichnet, daß die Blattfedern (17) so ausgelegt sind, daß die an der in den Boden (3) eindringenden Stelle (20) des Säschares (10) wirksame Kraft (F) über einen gewissen Schwenkbereich des Säschares (10) im wesentlichen konstant bleibt.

## Claims

1. Seed drill, including a frame (1) which, in its operational position, is supported on the ground (3) by running wheels (2), and including a hopper (4), from which, via metering members (5), the seed material situated in the hopper is introduced into the ground via pipe lines and sowing coulters (8), which are in communication with the pipe lines and are disposed so as to be displaceable in a vertical plane, wherein at least one sowing coulter (10) is situated in the region behind each running wheel and introduces the seed material into the ground in the running wheel track, and wherein the sowing coulter (10), which is disposed in the running wheel track (9), is mounted on a coulter holder (12), which is pivotable about a pivot joint (13), and is pressed by a spring towards the ground, characterised in that the spring is a leaf spring (16, 17) and is disposed within a supporting housing (11), which is provided for the accommodation of at least the pivot joint (13), so as to extend uprightly above the pivot joint (13) of the coulter holder (12).

2. Seed drill according to claim 1, characterised in that the mounting point (19) of the leaf spring (16, 17) is situated above the pivot joint (13) of the sowing coulter (10), which is disposed in the running wheel track (9).

3. Seed drill according to claim 1 or 2, characterised in that the supporting housing (11) is substantially closed and extends with a portion approximately vertically behind the running wheel, and in that the supporting housing (11) has an aperture through which the coulter holder (12) for the sowing coulter (10) extends into the supporting housing.

4. Seed drill according to at least one of claims 1 to 3, characterised in that a lever (14) protrudes beyond the pivot joint (13), on which the coulter holder (12) of the sowing coulter (10) is pivotally mounted, and in that the leaf spring (16, 17, 17') abuts against this lever (14).

5. Seed drill according to claim 4, characterised in that a roller (15) is mounted on the lever (14), and the leaf spring (16, 17') abuts against said roller.

6. Seed drill according to at least one of the preceding claims, characterised in that the spring comprises a set of leaf springs (16) containing leaf springs (17) of different lengths.

7. Seed drill according to at least one of the preceding claims, characterised in that the leaf springs (17) are so adapted that the force (F), which is effective at the location (20) of the sowing coulter (10) where it penetrates the ground (3), remains substantially constant over a specific pivotal range of the sowing coulter (10).

## Revendications

1. Semoir comportant un châssis (1) qui, en position de fonctionnement, s'appuie sur le sol (3) par des roues de roulement (2) et une trémie d'alimentation (4) à partir de laquelle des éléments de dosage (5) transfert la semence contenue dans la trémie d'alimentation par des tuyaux et des socs de semoir (8) raccordés à ceux-ci et qui sont mobiles dans un plan vertical, pour introduire les semences dans le sol, et chaque fois dans la zone derrière les roues de roulement, il est prévu au moins un soc de semoir (10) qui introduit la semence dans le sol au niveau de la trace des roues de roulement, le soc de semoir (10) associé à la trace de la roue de roulement (9) étant fixé sur un bras de support de soc (12) pivotant autour d'une articulation (13) et est poussé par un ressort en direction du sol, semoir caractérisé en ce que le ressort est un ressort-lame (16, 17) et est logé verticalement au-dessus de l'articulation 13 du bras de support de soc (12) à l'intérieur d'un châssis de support (11) prévu pour au moins cette articulation (13).

2. Semoir selon la revendication 1, caractérisé en ce que le point de fixation (19) du ressort-lame (16, 17) est situé au-dessus du point d'articulation (13) du soc de semoir (10) associé à la trace de la roue de roulement (9).

3. Semoir selon l'une quelconque des revendications 1 ou 2, caractérisé en ce que le châssis de support (11) est principalement fermé et s'étend par une partie, sensiblement verticalement derrière la roue de roulement et le châssis de support (11) comporte une ouverture à travers laquelle passe le bras de support (12) du soc de semoir (10) à l'intérieur du châssis de support.

4. Semoir selon au moins l'une des revendications 1 à 3, caractérisé en ce qu'au-dessus de l'articulation (13) par laquelle le bras (12) de support du soc de semoir (10) est articulé, on a un levier (14) en saillie et le ressort-lame (16, 17, 17') s'applique contre ce levier (14).

5. Semoir selon la revendication 4, caractérisé par un galet (15) porté par le levier (14) et qui s'applique contre le ressort-lame (16, 17').

6. Semoir selon au moins l'une des revendications précédentes, caractérisé en ce que le ressort est un paquet de ressorts-lames (16) formé de ressorts-lames (17) de longueur différente.

7. Semoir selon au moins l'une des revendications précédentes, caractérisé en ce que les ressorts-lames (17) sont articulés de façon que la force F appliquée au point (20) du soc de semoir (10) pénétrant dans le sol (3) est en principe constante pour une certaine de plage de pivotement du soc de semoir (10).

FIG. 1

FIG. 2

FIG. 3